# EUROPEAN PATENT SPECIFICATION

(11) **EP 3 115 309 B1**
(45) Date of publication and mention of the grant of the patent: **18.07.2018**
(21) Application number: 15762191.3
(22) Date of filing: 10.03.2015
(51) Int. Cl.: B65D 8/02, B29L 31/00, B29C 65/00, B29C 65/02

(54) **CHEMICAL CONTAINER AND METHOD FOR MANUFACTURING THE SAME**
BEHÄLTER ZUR AUFBEWAHRUNG EINER CHEMISCHEN FLÜSSIGKEIT UND HERSTELLUNGSVERFAHREN DAFÜR
CONTENEUR POUR LIQUIDE CHIMIQUE ET PROCÉDÉ DE FABRICATION D'UN TEL CONTENEUR

(30) Priority: 13.03.2014 CN 201410092348; 13.03.2014 CN 201410093750
(43) Date of publication of application: 11.01.2017
(73) Proprietor: Huaying Research Co., Ltd, Wuxi, Jiangsu 214135 (CN)
(72) Inventor: WEN, Sophia, Wuxi Jiangsu 214135 (CN)
(74) Representative: Sun, Yiming
(86) International application number: PCT/CN2015/073931
(87) International publication number: WO 2015/135460

(56) References cited:
- EP-A1- 0 504 718
- WO-A1-2015/004547
- CN-A- 1 230 702
- CN-A- 102 079 409
- CN-A- 102 548 868
- CN-A- 103 879 620
- CN-A- 103 964 039
- CN-U- 203 767 208
- CN-U- 203 767 209
- CN-Y- 201 330 006
- DE-A1- 2 215 192
- JP-A- H10 129 705
- JP-A- 2005 105 294
- JP-A- 2006 283 968

## Description

### TECHNICAL FIELD

The present disclosure relates to a liquid container, and particularly to a chemical container and a method for manufacturing the same.

### BACKGROUND

DE2212192A1 describes a chemical container comprising a head portion and a body portion. Said head portion comprises a top wall, a head side wall extending from an edge of the top wall, a first bulge being a boss in a middle of the top wall, and a second bulge being a rib around the boss. Said body portion is jointed with the head portion and defining a chamber together with the head portion. The top wall has a first connecting hole communicating with the chamber for pipelines to pass through, wherein the first connecting hole is defined on the boss.

JPH10129705A describes a plug structure of a chemical container to prevent contamination from the outside without inserting a pipe into the chemical every time the chemical is fed from a container by providing a joint part to connect the pipe to each side of a hole through which a plug is passed. When a plug is used for pouring the liquid content, a pipe is connected to a plug on an inner side of a container, i.e., a joint (b) part to form a pouring pipe. An external pipe leading to a use point is connected to a joint (a) part. Except when the plug is used for pouring the liquid content, the joint (a) part is covered by an appropriate means. When the plug is used for air vent, a filter and a filter-holding cap are attached to the joint (a) part to form the air vent, and the pipe is not connected thereto. When the plug is used for introducing the pressurized gas, a pressurized gas pipe is connected to the joint (a) part. In the case of a blind plug, the joint (a) part or (b) part is sealed.

EP0504718A1 describes a stackable barrel of plastic. A filling and emptying bung and an aerating and venting bung are arranged in a protected manner in depressions in the lid part of the barrel. The stacking surface of the lid part merges into two webs which run in the circumferential direction, include the bottom surface of the depression for the filling and emptying bung, run with a slight gradient from the stacking surface to the bottom surface of the depression and, in a slightly tilted inverted position of the barrel, form drainage channels for the residual liquid which collects on the inside of the lid part and drains through the bung hole of the filling and emptying bung.

JP2006283968A describes a gas vessel and a manufacturing method thereof. In this manufacturing method for the gas vessel having a resin liner having hollow inside constituted by joining the liner constituent members having at least a substantially cylindrical one end side mutually. Mutual joining parts of the liner constituent members are preliminarily heated and then are joined by laser welding. The resin liner in a temporarily joined condition is rotated and is preliminarily heated by a heater. Laser irradiation is performed by a laser torch on the downstream side of the heater to join the liner constituent members mutually in the peripheral direction.

The chemical container usually used for chemicals automatic transmission, such as a container for storing flowing liquid in high performance liquid chromatography, comprises a body portion and a cap having a plurality of channels. One end of a pipeline for transmitting chemical liquid is putted into the container by passing through the channel on the cap and is located at a bottom of the container, and the other end of the pipeline is connected with an inlet of a liquid pump. The chemicals in the container can be transmitted to a place where the chemicals are needed by suction of the liquid pump. In order to ensure stability of transmission speed of the chemicals, nitrogen is usually pumped into the container through another channel on the cap, which can produce a low pressure to ensure that the inlet of the liquid pump has enough liquid supply.

In semiconductor manufacturing field, a variety of chemical liquids are often used to clean a substrate, etch the substrate and do special surface preparation for the substrate. For that requirements of surface cleanliness of the substrate are stringent in manufacturing process of high-end semiconductor products. In order to avoid pollution and safety problems in preparation and transmission of the chemical liquids, an automatic control mechanism are used in the preparation and the transmission of the chemical liquids and the collection process after using, thereby a special chemical container is required to meet the automatic transmission of the chemical liquids.

The chemical container used in the semiconductor manufacturing must meet the requirements of corrosion resistance, no effect on the purity of the chemical liquids and ultra-cleanliness. In the semiconductor manufacturing, the concentration of the metal pollution in the chemical recipes containing hydrofluoric acid often used is below the level of one billionth (ppb). Therefore, the chemical container is usually made of ultrapure, corrosion-resistant plastic materials, such as polythene (PP) and polytetrafluoroethylene (PTFE, PFA, and PVDF), etc. The optional plastic containers in the market can be divided into two types: one type comprises structure consisting of two parts that are a body portion and a cap having a plurality of channels; another type comprises integrated structure composed of a body portion and a cap.

In order to reduce particle pollution in the chemical liquids, the liquid pump must be avoided to be used as much as possible during the chemical transmission. The chemical in the container can be pressured out by inputting nitrogen into the chemical container that can produce pressure in the chemical container. As the body portion and the cap are separated, the container can withstand limited pressure. Usually in the 68950 Pa (10 psi) gas pressure state, the gas leak will occur at the joint of the cap and the body portion, which not only limits the pressure increase in the container, but also the gas leakage brings out chemical vapors, and results in safety risks. The integral container with one part that is composed of a bottle body and a bottle cap can be a good solution to the problem of gas leakage. However, a special mold are usually needed, the manufacturing costs are higher.

It is necessary to provide an improved solution for the above problems.

### SUMMARY

One object of the present disclosure is to provide an improved chemical container.

Another object of the present disclosure is to provide a method for manufacturing an improved chemical container.

In order to achieve the above objects, according to one aspect of the present disclosure, the present disclosure discloses a chemical container, comprising: a head portion comprising a top wall, a head side wall extending from an edge of the top wall, and a body portion jointed with the head portion and defining a chamber together with the head portion. The top wall has passages communicating with the chamber for pipelines to pass through. The head portion comprises a plurality of bulges extending from an outer surface of the top wall outwardly. The head portion has a plurality of connecting holes extending from surfaces of the bulges inwardly and a plurality of pipeline holes extending from the connecting holes inwardly and passing through the top wall. A size of the connecting hole is larger than that of the pipeline hole. The bulges comprise a boss in the middle of the top wall and a rib around the boss. One connecting hole is defined on the boss and at least one connecting hole is defined on the rib. The chemical container also comprises a plurality of engagement members each having a through hole. The engagement members are able to be fixed into the connecting holes removably. When one engagement member is fixed into one connecting hole, the through hole of the one engagement member and the pipeline hole corresponding to the one connecting hole form a pipeline passage. A pipeline is able to extend into the chamber by passing through the pipeline passage. The chamber is closed by combination of the engagement members and the connecting holes.

In a further embodiment, the head portion comprises an outer edge wall extending from the edge of the top wall, an extending direction of the outer edge wall is opposite to that of the head side wall, and the outer edge wall and the top wall of the head portion together define a groove for receiving chemical liquid escaping from the chemical container. A drain hole communicating with the groove is defined on the outer edge wall.

According to another aspect of the present disclosure, the present disclosure provides a method for manufacturing a chemical container, the method comprising: providing a head portion comprising a top wall, a head side wall extending from an edge of the top wall; providing a body portion; and welding the head portion and the body portion to define a chamber. The head portion is made from a raw head portion comprising a top wall, a head side wall extending from an edge of the top wall, an outer edge wall extending from the edge of the top wall and a plurality of bulges extending from an outer surface of the top wall outwardly. The raw head portion is processed to form a plurality of connecting holes extending from surfaces of the bulges inwardly and a plurality of pipeline holes extending from the connecting holes inwardly and passing through the top wall. A size of the connecting hole is larger than that of the pipeline hole. The bulges comprise a boss in the middle of the top wall and a rib around the boss, and one connecting hole is defined on the boss and at least one connecting hole is defined on the rib. The method further comprises providing a plurality of engagement members each having a through hole. The engagement members are able to be fixed into the connecting holes removably. When one engagement member is fixed into one connecting hole, the through hole of the one engagement member and the pipeline hole corresponding to the one connecting hole form a pipeline passage. A pipeline is able to extend into the chamber by passing through the pipeline passage. The chamber is closed by combination of the engagement members and the connecting holes.

In a further embodiment, an extending direction of the outer edge wall is opposite to that of the head side wall, and the outer edge wall and the top wall of the head portion together define a groove for receiving chemical liquid escaping from the chemical container. A drain hole communicating with the groove is defined on the outer edge wall.

Comparing with the prior art, the chemical container provided in the present disclosure can meet requirements of easy manufacturing, low cost, withstanding of greater internal pressure and/or collection of leaking liquids etc..

### BRIEF DESCRIPTION OF THE DRAWINGS

The present disclosure will be further introduced by combining accompanying drawings and embodiments.
Fig. 1 is a flow diagram showing a method for manufacturing a chemical container according to one embodiment of the present disclosure;
Fig. 2A and Fig. 2B respectively are a sectional view and a top view of a raw head portion of the chemical container according to one embodiment of the present disclosure;
Fig. 3A and Fig. 3B respectively are a sectional view and a top view of a head portion of the chemical container according to one embodiment of the present disclosure;
Fig. 4 is a structure diagram of a trunk portion of the chemical container according to one embodiment of the present disclosure;
Fig. 5 is a structure diagram of a bottom portion of the chemical container according to one embodiment of the present disclosure;
Fig. 6 is a structure diagram of the chemical container according to one embodiment of the present disclosure;
Fig. 7 is a structure diagram of the chemical container according to another embodiment of the present disclosure;
Fig. 8 is a structure diagram of the chemical container according to still another embodiment of the present disclosure; and
Fig. 9 is a structure diagram of the chemical container according to yet another embodiment of the present disclosure.

### DETAILED DESCRIPTION OF THE PREFERRED EMBODIMENTS

The present disclosure will be further introduced by combining accompanying drawings and embodiments.

The drawings in the present disclosure is used to further understand the present disclosure and belong to one part of the present disclosure. The schematic embodiment and its description are used to explain the present disclosure, and do not form any improper limitations to the present disclosure.

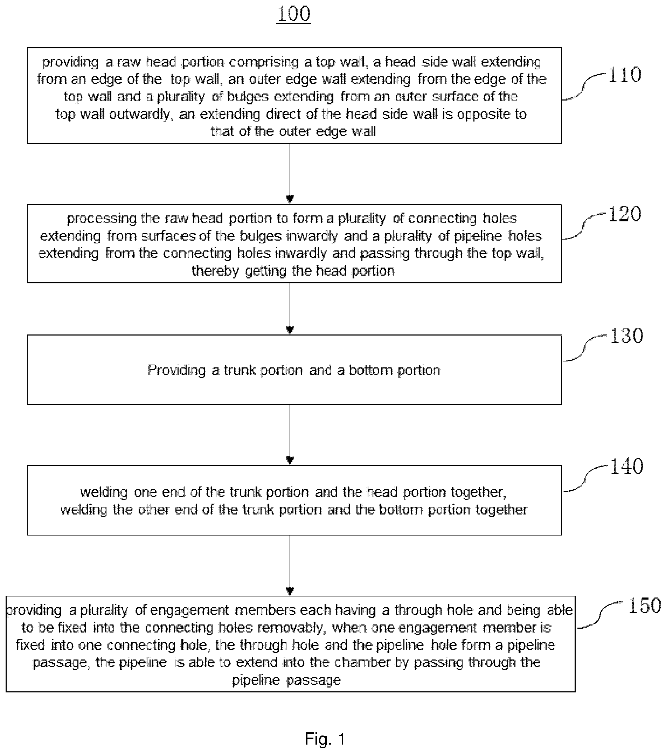

Fig. 1 is a flow diagram showing a method for manufacturing a chemical container according to one embodiment of the present disclosure. As shown in Fig. 1, the method 100 comprises following operations.

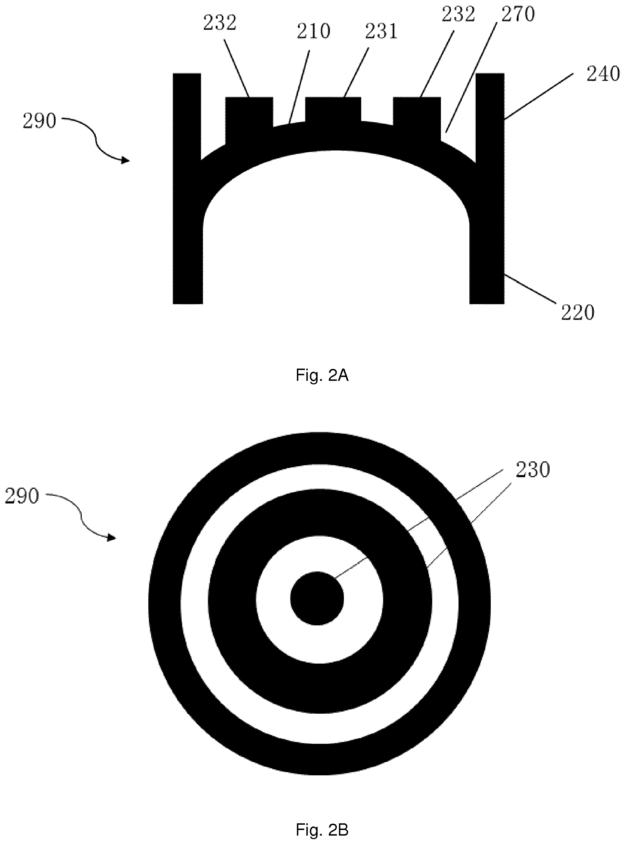

At 110, referring to Fig. 2A and Fig. 2B, a raw head portion 290 is provided. The raw head portion 290 comprises a top wall 210, a head side wall 220 extending from an edge of the top wall 210, a plurality of bulges 230 extending from an outer surface of the top wall 210 outwardly and an outer edge wall 240 extending from the edge of the top wall 210. An extending direction of the outer edge wall 240 is opposite to that of the head side wall 220. The outer edge wall 240 and the top wall 210 together define a groove 270 that can receive chemical liquid escaping from the chemical container.

The raw head portion 290 is formed by injection molding.

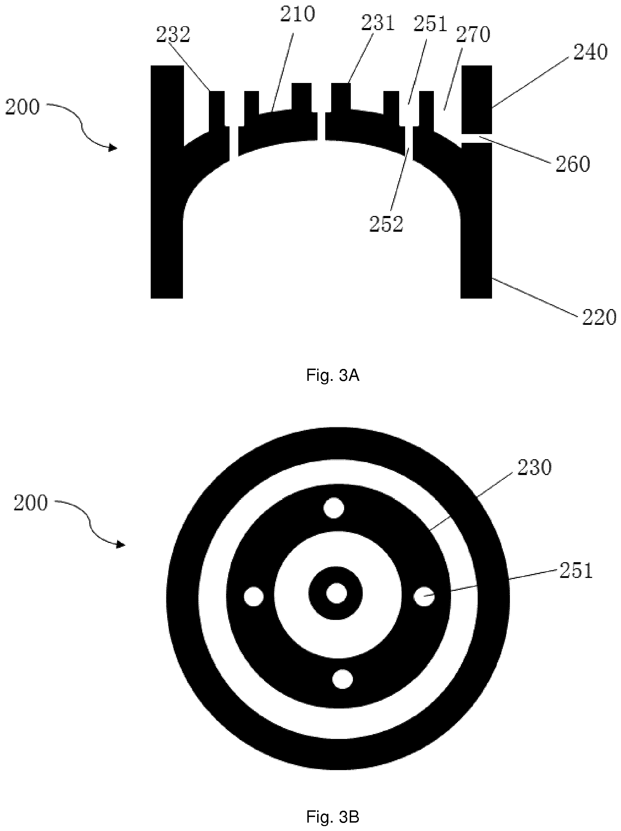

In one embodiment, referring to Fig. 3A and Fig. 3B, the bulges 230 comprise a boss 231 in the middle of the top wall 210 and a rib 232 around the boss 231.

At 120, referring to Fig. 3A and Fig. 3B, the raw head portion 290 is processed to form a plurality of connecting holes 251 extending from surfaces of the bulges 230 inwardly and a plurality of pipeline holes 252 extending from the connecting holes 251 inwardly and passing through the top wall 210, thereby getting the head portion 200. A size of the connecting hole 251 is larger than that of the pipeline hole 252.

As shown in Fig. 3A, in one embodiment, a drain hole 260 is defined on the outer edge wall 240 and communicates with the groove 270. The chemicals leaking into the groove 270 can be drained into a specified collection site by connecting the drain hole with a pipe line.

As shown in Fig. 3A, one connecting hole 251 and corresponding pipeline hole 252 are formed in the boss 231; at least one connecting holes 251, such as four or more, and corresponding pipeline holes 252 are formed in the rib 232.

For the use of machining processes, it can be very easy to get required size and required number of the connecting hole 251 and the pipeline hole 252 according to demands of application, to meet need of multi-channel transmission.

At 130, a trunk portion 300 and a bottom portion 400 are provided.

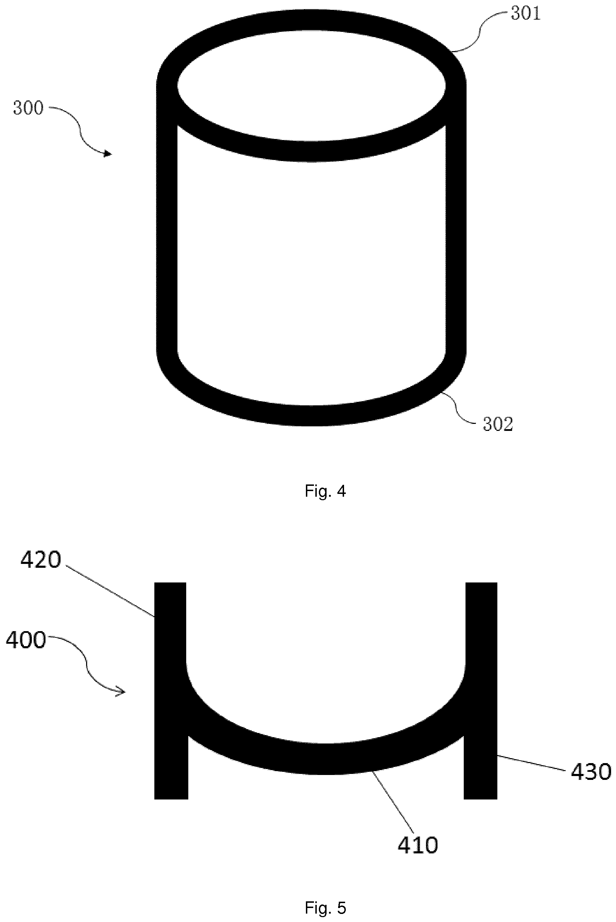

As shown in Fig. 4, the trunk portion 300 is a hollow cylinder.

As shown in Fig. 5, the bottom portion 400 comprises a bottom wall 410, a bottom side wall 420 extending from an edge of the bottom wall 410 and a support portion 430 extending from the edge of the bottom wall 410. An extending direction of the support portion 430 is opposite to that of the bottom side wall 420.

The support portion 430 is used to support the chemical container. The bottom wall 410 is arc-shaped, so that the chemicals in the chemical container can be exhausted as much as possible. In one alternative embodiment, the trunk portion 300 and the bottom portion 400 can be integrally formed, and then they can be referred as the body portion.

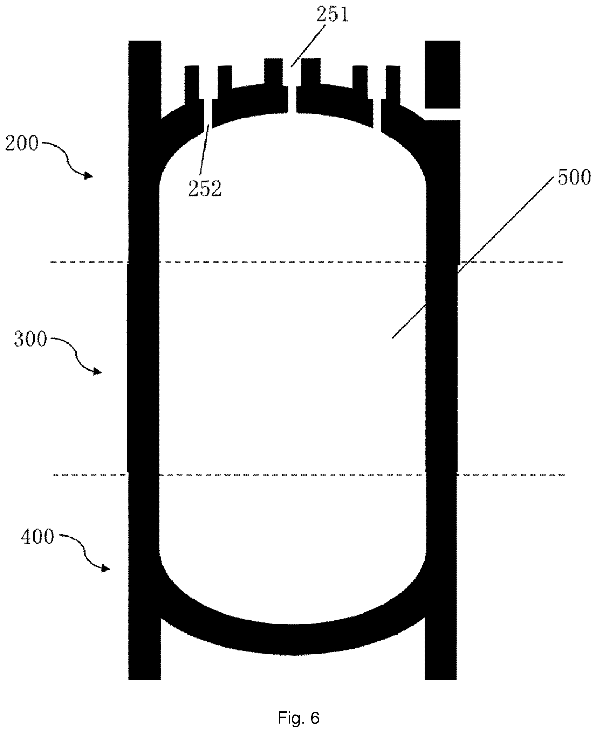

At 140, referring to Fig. 6, one end 301 of the trunk portion 300 and the head portion 200 are welded together, the other end 302 of the trunk portion 300 and the bottom portion 400 are welded together. Thus, the trunk portion 300, the bottom portion 400 and the head portion 200 together define a chamber 500, which is communicated with an outside space only through the pipeline holes 252.

In one alternative embodiment, if the trunk portion 300 and the bottom portion 400 are integrally formed, the body portion and the head portion 200 are welded together directly, and then the head portion 200 and the body portion together form the chamber.

At 150, a plurality of engagement members each having a through hole (not shown) are provided. The engagement members are able to be removably fixed in the connecting holes 251. When one engagement member is fixed in one connecting hole 251, the pipeline hole corresponding to the one connecting hole 251 and the through hole of the one engagement member form a pipeline passage, by which the pipeline (not shown) can extend into the chamber 500.

In a preferred embodiment, the connecting hole 251 is an inner thread hole, the engagement member is an outer thread member. The engagement member is tightly fixed in the connecting hole 251 by engagement of the inner thread hole and the outer thread member. In addition, a sealing member, such as a gasket (not shown), is provided below the engagement member to ensure a sealing performance of the chemical container.

Thus, the final chemical container can be obtained, and the chemical liquid can be injected into and extracted from the chemical container by the transmission pipelines. The chemical container can withstand higher inner pressure, e.g., in a 344750 Pa (50 psi) gas pressure state, there is no gas leakage or liquid leakage between the engagement member and the connecting hole 251.

In order to further ensure the safety, the chemical container also has a groove 270 shown in Fig. 3 for receiving the escaping liquid. All kinds of sensors is disposed in the groove 270 for detecting the escaping liquids, thereby sending alarm to prevent a large scale chemical leakage.

In the method for manufacturing the chemical container, the head portion 200 is obtained by twice processes. First, the raw head portion 290 is formed by the injection molding process, and then the final head portion 200 is formed by the machining process. The bottom portion 400 and the trunk portion 300 are obtained by one process, that is the injection molding process.

In conclusion, in one embodiment, three molds is required to be designed and manufactured by the injection molding process, the three molds are a head portion mold, a trunk portion mold and a bottom portion mold respectively. After the raw head portion 290 is processed by the machining process, the head portion 200, the bottom portion 400 and the trunk portion 300 are jointed by welding process to form the chemical container shown in Fig. 6.

In one optional embodiment, the raw head portion 290 and the final head portion 200 cannot be provided with the bulges 230, the pipeline hole 252 and the connecting hole 251, instead, the top wall 210 can be provided with other mouth structure for pipelines to pass through. For example, the mouth portion structure with an external thread in the prior art is sealed by the engagement of a cap and the mouth portion, the transmission pipeline goes through the cap and the mouth portion to extend into the chamber 500. In the embodiment, the head portion 200 and the body portion can be injection molded from a same mold. In the embodiment, one of features or advantages of the present disclosure is that the outer structural design of the head portion 200 has the groove 270, which can receive the chemical liquid leaking from the chemical head portion. As the sensors are disposed at the groove 270, it is easy to automatically monitor if the chemical container happens to leak.

It is easily understood that the raw head portion 290 made by injection molding can also be used as the bottom portion 400 directly. Likewise, the raw head portion 290 that is used as the bottom portion 400, the head portion 200 and the trunk portion 300 are welded together, and the outer edge wall 240 of the raw head portion 290 can be used to support the chemical container shown in Fig. 6. Hence, there is no need to design the mold for the bottom portion 400, which means that the bottom portion 400 and the head portion 200 are injection molded from a same mold. Thus, only two molds are needed to complete the manufacture of the chemical container.

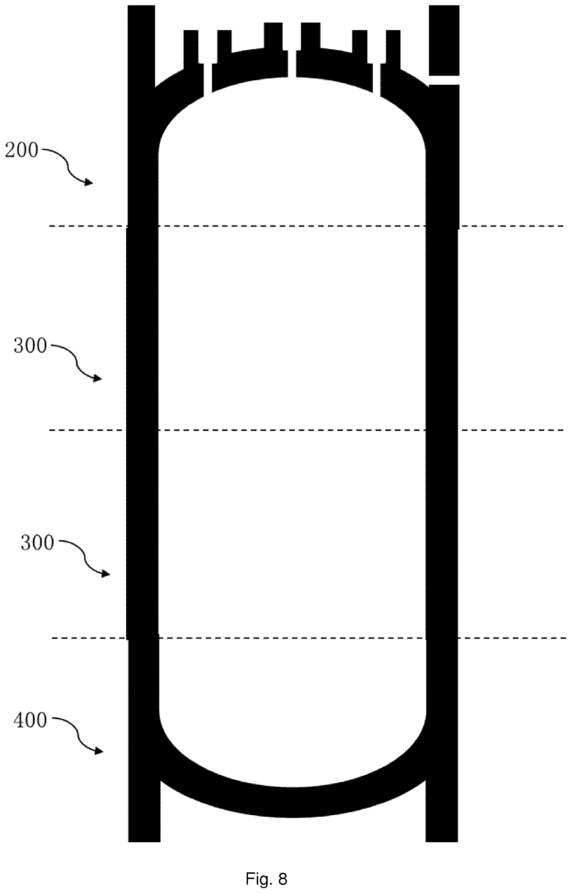

In addition, because the capacity requirements of the containers are different, the molds or production lines require to be changed to produce different capacities of the chemical containers in the prior art. In the present disclosure, the amount of the trunk portion 300 is changed according to actual capacity requirements. Namely, two or more trunk portion can be welded together to form a longer trunk portion for obtaining the chemical containers having different capacities. The single trunk portion shown in Fig. 4 can also be known as a trunk portion element. As shown in Fig. 8, it employs two trunk portion elements. Each trunk portion element is injection molded from the same mold. Namely, the chemical containers having different capacities can be manufactured without increasing the amount of the mold.

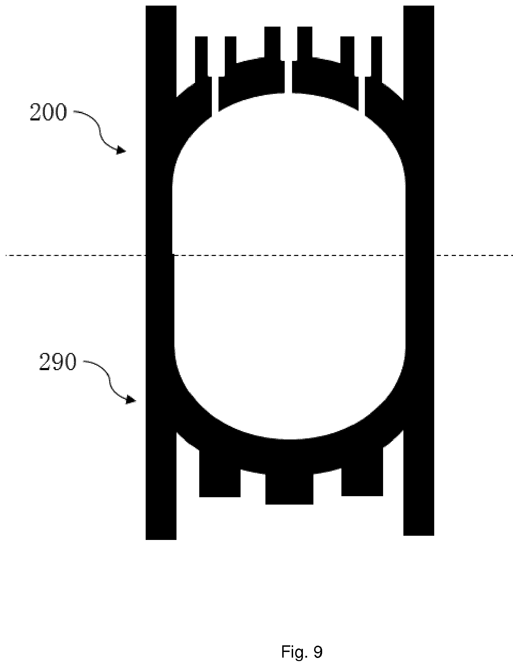

In addition, as a change, the bottom portion 400 and the trunk portion 300 are injection molded together, and it is known as the body portion. Thus, it only needs that one end of the body portion and one end of the head portion 200 are welded together. Further, the raw head portion 290 can also be used as the body portion, and the raw head portion 290 used as the body portion and the head portion 200 are welded together to form the chemical container shown in Fig. 9. Thus, only one mold is required to be developed to make the chemical container, thereby reducing the cost and being easy to operate.

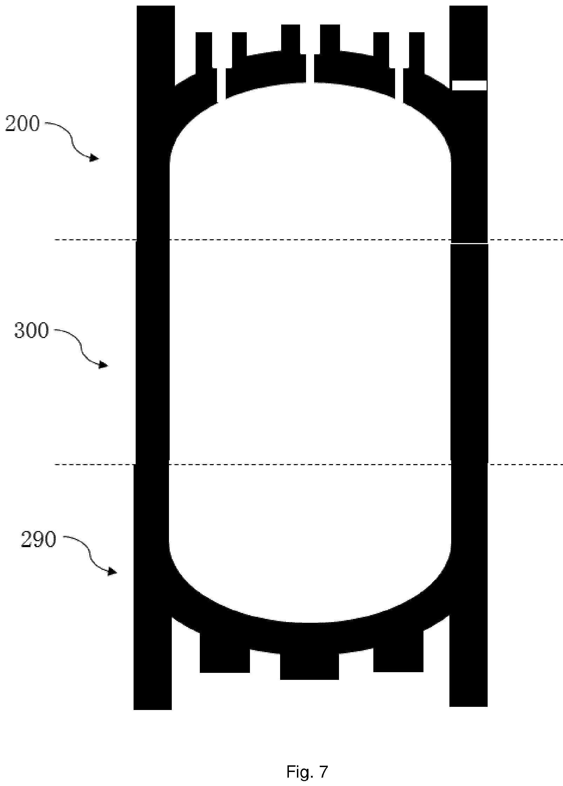

According to another aspect of the present disclosure, combined reference with Fig. 2A to Fig. 9, the present disclosure also provides a chemical container. The chemical container comprises the head portion 200 and the body portion that is jointed with the head portion 200. The head portion and the body portion together define a chamber 500.

The head portion 200 comprises a top wall 210, a head side wall 220 extending from an edge of the top wall 210 and a plurality of bulges 230 outwardly extending from an outer surface of the top wall 210. The head portion has a plurality of connecting holes 251 inwardly extending from surfaces of the bulges 230 and a plurality of pipeline holes 252 inwardly extending from connecting holes 251 and passing through the top wall 210. The size of the connecting hole is larger than that of the pipeline hole. The chamber 500 is communicated with an outside space only through the pipeline hole 252.

The chemical container also comprises a plurality of engagement members each having a through hole. The engagement members can be removably fixed in the connecting holes 251. When one engagement member is fixed in one connecting hole 251, the pipeline hole corresponding to the one connecting hole 251 and the through hole of the one engagement member form a pipeline passage. A plurality of pipelines is able to extend into the chamber by the pipeline passages. The chamber is closed chamber by combination of the engagement members and the connecting holes. In a preferred embodiment, the connecting hole 251 is an inner thread hole, and the engagement member is an outer thread member. The engagement member is tightly fixed in the connecting hole 251 by engagement of the inner thread hole and the outer thread member. In addition, a sealing member, such as a gasket (not shown) is provided below the engagement member to ensure a sealing performance of the chemical container.

In one embodiment, the head portion 200 also comprises an outer edge wall 240 extending from the edge of the top wall. The extending direction of the outer edge wall 240 is opposite to that of the head side wall. The outer edge wall 240 and the top wall 210 together define a groove 270 that can receive chemical liquid escaping from the chemical container. A drain hole 260 is defined on the outer edge wall 240 and communicates with the groove 270. The chemicals leaking in the groove 270 can be drained into a specified collection site by connecting the drain hole with a pipeline. One connecting hole 251 and corresponding pipeline hole 252 are formed in the boss 231, and at least one connecting holes 251, such as four or more, and corresponding pipeline holes 252 are formed in the rib 232.

In one embodiment, the body portion comprises the trunk portion 300 and the bottom portion 400. The trunk portion is a hollow cylinder. One end of the trunk portion 300 and the head portion 200 are welded together, and the other end of trunk portion 300 and the bottom portion 400 are welded together.

In one embodiment, the bottom portion 400 comprises a bottom wall 410, a bottom side wall 420 extending from an edge of the bottom wall 410 and a support portion 430 extending from the edge of the bottom wall 410. An extending direction of the support portion 430 is opposite to that of the bottom side wall. The bottom side wall 420 and the trunk portion 300 are jointed together by welding. The bottom wall 410 is arc-shaped.

In another embodiment, the difference between the bottom portion 400 and the head portion 200 is only that the bottom portion 400 is not provided with the connecting hole 251 and the pipeline hole 252 like as the head portion 200. The bottom portion 400 and the head portion 200 are injection molded from the same mold.

In one alternative embodiment, the structure of the body portion is substantially identical with the structure of the head portion 200. Their difference is only that the body portion is not provided with the connecting hole and the pipeline hole like as the head portion 200. The body portion and the head portion are injection molded from the same mold, thereby only one mold is required to be designed for the chemical container with the low cost.

In the embodiment, the head portion 200 and the body portion can be injection molded from the same mold. In the embodiment, one of the features, benefits and advantages of the present disclosure is that the outer structural design of the head portion 200 has the groove 270, which can receive the chemicals leaking from the chemical head portion. As the sensors are disposed at the groove 270, it is easy to automatically monitor if the chemical container happens to leak.

The foregoing description has sufficiently disclosed the embodiments of the present disclosure. It should be noted that any changes to embodiments of the present disclosure for those skilled in the art may be resorted without departing from a scope of the present disclosure as claimed. Accordingly, the scope of the appended claims of the present disclosure is not limited in the foregoing description of embodiments.

## Claims

1. A chemical container comprising:
- a head portion (200) comprising a top wall (210), a head side wall (220) extending from an edge of the top wall; and
- a body portion (300, 400) jointed with the head portion and defining a chamber (500) together with the head portion;
wherein the top wall has passages communicating with the chamber for pipelines to pass through, wherein the head portion comprises a plurality of bulges (230) extending from an outer surface of the top wall outwardly, the head portion has a plurality of connecting holes (251) extending from surfaces of the bulges inwardly and a plurality of pipeline holes (252) extending from the connecting holes inwardly and passing through the top wall, and a size of the connecting hole is larger than that of the pipeline hole, wherein the bulges (230) comprise a boss (231) in the middle of the top wall and a rib (232) around the boss, and one connecting hole (251) is defined on the boss and at least one connecting hole (251) is defined on the rib, and wherein the chemical container also comprises a plurality of engagement members (150) each having a through hole, the engagement members are able to be fixed into the connecting holes removably, when one engagement member is fixed into one connecting hole, the through hole of the one engagement member and the pipeline hole corresponding to the one connecting hole form a pipeline passage, a pipeline is able to extend into the chamber by passing through the pipeline passage, and wherein the chamber is closed by combination of the engagement members and the connecting holes.

2. The chemical container according to claim 1, is **characterized in that** the head portion comprises an outer edge wall (240) extending from the edge of the top wall, an extending direction of the outer edge wall is opposite to that of the head side wall, and the outer edge wall and the top wall of the head portion together define a groove (270) for receiving chemical liquid escaping from the chemical container.

3. The chemical container according to claim 2, is **characterized in that** a drain hole communicating with the groove is defined on the outer edge wall.

4. The chemical container according to claim 1, is **characterized in that** the body portion comprises a trunk portion (300) and a bottom portion (400), the trunk portion is a hollow cylinder, one end of the trunk portion and the head portion are welded together, and the other end of the trunk portion and the bottom portion are welded together.

5. The chemical container according to claim 4, is **characterized in that** the bottom portion comprises a bottom wall (410), a bottom side wall extending from an edge of the bottom wall and a support portion (430) extending from the edge of the bottom wall, an extending direction of the support portion is opposite to that of the bottom side wall, and the bottom side wall (420) and the trunk portion are welded together.

6. The chemical container according to claim 4, is **characterized in that** the bottom portion and the head portion are formed by injection molding using a same mold.

7. The chemical container according to claim 4, is **characterized in that** the trunk portion is formed by welding at least two cylinder components.

8. The chemical container according to claim 1, is **characterized in that** the body portion and the head portion are formed by injection molding using a same mold.

9. A method (100) for manufacturing a chemical container, the method comprising:
- providing a head portion (200) comprising a top wall (210), a head side wall (220) extending from an edge of the top wall;
- providing a body portion (300, 400); and
- welding the head portion and the body portion to define a chamber (500);
wherein the head portion is made from a raw head portion (290) comprising a top wall, a head side wall extending from an edge of the top wall, an outer edge wall extending from the edge of the top wall and a plurality of bulges (230) extending from an outer surface of the top wall outwardly, the raw head portion is processed to form a plurality of connecting holes (251) extending from surfaces of the bulges inwardly and a plurality of pipeline holes (252) extending from the connecting holes inwardly and passing through the top wall, a size of the connecting hole is larger than that of the pipeline hole, wherein the bulges (230) comprise a boss (231) in the middle of the top wall and a rib (232) around the boss, and one connecting hole (251) is defined on the boss and at least one connecting hole (251) is defined on the rib, wherein the method further comprises providing a plurality of engagement members each having a through hole, the engagement members are able to be fixed into the connecting holes removably, when one engagement member is fixed into one connecting hole, the through hole of the one engagement member and the pipeline hole corresponding to the one connecting hole form a pipeline passage, a pipeline is able to extend into the chamber by passing through the pipeline passage, and wherein the chamber is closed by combination of the engagement members and the connecting holes.

10. The method according to claim 9, is **characterized in that** an extending direction of the outer edge wall is opposite to that of the head side wall, and the outer edge wall and the top wall of the head portion together define a groove for receiving chemical liquid escaping from the chemical container.

11. The method according to claim 10, is **characterized in that** a drain hole communicating with the groove is defined on the outer edge wall.

12. The method according to claim 9, is **characterized in that** the body portion comprises a trunk portion and a bottom portion, the welding the head portion and the body portion comprises:
- welding one end of the trunk portion and the head portion together; and
- welding the other end of the trunk portion and the bottom portion together.

13. The method according to claim 12, is **characterized in that** the bottom portion comprises a bottom wall, a bottom side wall extending from an edge of the bottom wall and a support portion extending from the edge of the bottom wall, an extending direction of the support portion is opposite to that of the bottom side wall, and the bottom side wall and the trunk portion are welded together.

14. The method according to claim 12, **characterized in that** the bottom portion and the raw head portion are formed by injection molding using a same mold.

15. The method according to claim 9, is **characterized in that** the body portion and the head portion are formed by injection molding using a same mold.

## Patentansprüche

1. Ein Chemikalienbehälter umfassend:
- Ein Kopfteil (200) umfassend eine oberste Wand (210) und eine Kopf-Seitenwand (220), die sich von einer Kante der obersten Wand erstreckt;
- ein Korpusteil (300, 400), der mit dem Kopfteil zusammengefügt ist und zusammen mit dem Kopfteil eine Kammer (500) definiert;
wobei die oberste Wand Durchgänge aufweist, die zum Hindurchführen von Rohrleitungen mit der Kammer in Verbindung stehen;
wobei
das Kopfteil mehrere Ausbuchtungen (230) umfasst, die sich von einer äußeren Oberfläche der obersten Wand nach außen erstrecken,
das Kopfteil mehrere verbindende Löcher (251) aufweist, die sich von Oberflächen der Ausbuchtungen nach innen erstrecken und mehrere Rohrleitungslöcher (252), die sich von den Verbindungslöchern nach innen erstrecken und durch die oberste Wand hindurchgehen, und
eine Größe des Verbindungslochs größer ist als die des Rohrleitungslochs, wobei die Ausbuchtungen (230) einen Buckel (231) in der Mitte der obersten Wand und eine Rippe (232) um den Buckel herum umfassen, und
ein Verbindungsloch (251) an dem Buckel vorgesehen ist und
mindestens ein Verbindungsloch (251) an der Rippe vorgesehen ist, und
wobei
der Chemikalienbehälter auch mehrere Bindungselemente (150) umfasst, die jeweils ein Durchgangsloch aufweisen,
die Bindungselemente in den Verbindungslöchern entfernbar befestigt werden können, wenn ein Bindungselement in einem Verbindungsloch befestigt ist, das Durchgangsloch des einen Bindungselements und das Rohrleitungsloch, das mit dem einen Verbindungsloch korrespondiert, einen Rohrleitungsdurchgang bilden,
eine Rohrleitung sich mittels Hindurchgehens durch den Rohrleitungsdurchgang in die Kammer erstrecken kann, und wobei die Kammer durch Kombination der Bindungselemente und der Verbindungslöcher geschlossen ist.

2. Der Chemikalienbehälter nach Anspruch 1, **dadurch gekennzeichnet, dass** das Kopfteil eine äußere Kantenwand (240) umfasst, die sich von der Kante der obersten Wand erstreckt, eine Erstreckungsrichtung der äußeren Kantenwand derjenigen der Kopfseitenwand entgegengesetzt ist, und die äußere Kantenwand und die oberste Wand des Kopfteils zusammen eine Nut (270) zum Aufnehmen von chemischer Flüssigkeit definieren, die dem Chemikalienbehälter entweicht.

3. Der Chemikalienbehälter nach Anspruch 2, **dadurch gekennzeichnet, dass** an der äußeren Kantenwand ein Abflussloch vorgesehen ist, das mit der Nut verbunden ist.

4. Der Chemikalienbehälter nach Anspruch 1, **dadurch gekennzeichnet, dass** das Korpusteil ein Rumpfteil (300) und ein Bodenteil (400) umfasst, das Rumpfteil ein Hohlzylinder ist, ein Ende des Rumpfteils und das Kopfteil miteinander verschweißt sind und das andere Ende des Rumpfteils und des Bodenteils miteinander verschweißt sind.

5. Der Chemikalienbehälter nach Anspruch 4, **dadurch gekennzeichnet, dass** das Bodenteil umfasst: eine Bodenwand (410), eine Bodenseitenwand, die sich von einer Kante der Bodenwand erstreckt, und ein Stützteil (430), das sich von der Kante der Bodenwand erstreckt, wobei eine Erstreckungsrichtung des Stützteils derjenigen der Bodenseitenwand entgegengesetzt ist, und die Bodenseitenwand (420) und das Rumpfteil miteinander verschweißt sind.

6. Der Chemikalienbehälter nach Anspruch 4, **dadurch gekennzeichnet, dass** das Bodenteil und das Kopfteil mittels Spritzgießens in einer selben Form gebildet werden.

7. Der Chemikalienbehälter nach Anspruch 4, **dadurch gekennzeichnet, dass** das Rumpfteil mittels Schweißens wenigstens zweier Zylinderkomponenten gebildet wird.

8. Der Chemikalienbehälter nach Anspruch 1, **dadurch gekennzeichnet, dass** das Korpusteil und das Kopfteil mittels Spritzgießens in einer selben Form gebildet werden.

9. Ein Verfahren (100) zum Herstellen eines Chemikalienbehälters, wobei das Verfahren umfasst:
- Bereitstellen eines Kopfteils (200) umfassend eine oberste Wand (210) und eine Kopf-Seitenwand (220), die sich von einer Kante der obersten Wand erstreckt;
- Bereitstellen eines Korpusteils (300, 400); und
- Verschweißen des Kopfteils mit dem Korpusteil, um eine Kammer (500) zu definieren;
wobei
das Kopfteil hergestellt wird aus
einem unverarbeiteten Kopfteil (290), das umfasst: eine oberste Wand, eine Kopfseitenwand, die sich von einer Kante der obersten Wand erstreckt, eine äußere Kantenwand, die sich von der Kante der obersten Wand erstreckt, und mehrere Ausbuchtungen (230), die sich von einer äußeren Oberfläche der obersten Wand nach außen erstrecken,
wobei das unverarbeitete Kopfteil bearbeitet wird, um zu bilden:
mehrere Verbindungslöcher (251), die sich von Oberflächen der Verbindungslöcher nach innen erstrecken und
mehrere Rohrleitungslöcher (252), die sich von den Verbindungslöchern nach innen erstrecken und durch die oberste Wand hindurchgehen, wobei eine Größe des Verbindungsloches größer ist als die des Rohrleitungsloches,
wobei
die Ausbuchtungen (230) einen Buckel (231) in der Mitte der obersten Wand und eine Rippe (232) um den Buckel herum umfassen und
ein Verbindungsloch (251) an dem Buckel vorgesehen ist und wenigstens ein Verbindungsloch (251) an der Rippe vorgesehen ist,
wobei das Verfahren auch umfasst:
Bereitstellen mehrerer Bindungselemente, die jeweils ein Durchgangsloch aufweisen,
die Bindungselemente in den Verbindungslöchern entfernbar befestigt werden können,
wenn ein Bindungselement in einem Verbindungsloch befestigt ist, das Durchgangsloch des einen Bindungselements und das Rohrleitungsloch, das dem einen Verbindungsloch entspricht, einen Rohrleitungsdurchgang bilden, eine Rohrleitung sich in die Kammer mittels Hindurchgehens durch den Rohrleitungsdurchgang erstrecken kann, und wobei die Kammer mittels Kombination der Bindungselemente und der Verbindungslöcher geschlossen ist.

10. Das Verfahren nach Anspruch 9, **dadurch gekennzeichnet, dass** eine Erstreckungsrichtung der äußeren Kantenwand entgegengesetzt ist zu derjenigen der Kopfseitenwand, und die äußere Kantenwand und die oberste Wand des Kopfteils zusammen eine Nut zum Aufnehmen chemischer Flüssigkeit definieren, die aus dem Chemikalienbehälter entweicht.

11. Das Verfahren nach Anspruch 10, **dadurch gekennzeichnet, dass** ein Abflussloch, das mit der Nut verbunden ist, durch die äußere Kantenwand definiert ist.

12. Das Verfahren nach Anspruch 9, **dadurch gekennzeichnet, dass** der Korpusteil ein Rumpfteil und ein Bodenteil umfasst, wobei das Schweißen des Kopfteils und des Korpusteils umfasst:
- Zusammenschweißen eines Endes des Rumpfteils mit dem Kopfteil; und
- Zusammenschweißen des anderen Endes des Rumpfteils mit dem Bodenteil.

13. Verfahren nach Anspruch 12, **dadurch gekennzeichnet, dass** das Bodenteil umfasst: eine Bodenwand, eine Bodenseitenwand, die sich von einer Kante der Bodenwand erstreckt, und ein Stützteil, das sich von der Kante der Bodenwand erstreckt, wobei eine Erstreckungsrichtung des Stützteils derjenigen der Bodenseitenwand entgegengesetzt ist, und die Bodenseitenwand und das Rumpfteil miteinander verschweißt werden.

14. Verfahren nach Anspruch 12, **dadurch gekennzeichnet, dass** das Bodenteil und das unbearbeitete Kopfteil mittels Spritzgießens in einer selben Form gebildet werden.

15. Verfahren nach Anspruch 9, **dadurch gekennzeichnet, dass** das Korpusteil und das Kopfteil mittels Spritzgießens in einer selben Form gebildet werden.

## Revendications

1. Récipient pour produits chimiques comprenant :
- une portion de tête (200) comprenant une paroi supérieure (210), une paroi latérale de tête (220) s'étendant depuis un bord de la paroi supérieure ;
- une portion de corps (300, 400) jointe à la portion de tête et définissant une chambre (500) ensemble avec la portion de tête ;
dans lequel la paroi supérieure présente des passages communicant avec la chambre pour permettre à des conduites de passer à travers la chambre,
dans lequel la portion de tête comprend une pluralité de renflements (230) s'étendant de manière extérieure depuis une surface extérieure de la paroi supérieure, la portion de tête possède une pluralité de trous de raccordement (251) s'étendant de manière intérieure à partir de surface des renflements et une pluralité de trous de conduite (252) s'étendant de manière intérieure à partir des trous de raccordement et passant à travers la paroi supérieure, et une taille du trou de raccordement est supérieure à celle du trou de conduite, dans lequel les renflements (230) comprennent une bosse (231) située au milieu de la paroi supérieure et une nervure (232) située autour de la bosse, et un trou de raccordement (251) est défini sur la bosse et au moins un trou de raccordement (251) est défini sur la nervure, et
dans lequel le récipient pour produits chimiques comprend également une pluralité d'éléments de mise en prise (150) chacun possédant un trou traversant, les éléments de mise en prise sont capables d'être fixés de manière amovible au sein des trous de raccordement, lorsqu'un élément de mise en prise est fixé au sein d'un trou de raccordement, le trou traversant de l'un élément de mise en prise et du trou de conduite correspondant à l'un trou de raccordement forment un passage de conduite,
une conduite est capable de s'étendre au sein de la chambre en passant à travers le passage de conduite, et dans lequel la chambre est fermée par une combinaison des éléments de mise en prise et des trous de raccordement.

2. Récipient pour produits chimiques selon la revendication 1, **caractérisé en ce que** la portion de tête comprend une paroi de bord extérieur (240) s'étendant depuis le bord de la paroi supérieure, une direction d'extension de la paroi de bord extérieur est située à l'opposé de la paroi latérale de tête, et la paroi de bord extérieur et la paroi supérieure de la portion de tête définissent ensemble une rainure (270) recevant un liquide chimique s'échappant du récipient pour produits chimiques.

3. Récipient pour produits chimiques selon la revendication 2, **caractérisé en ce qu'**un trou de drainage communicant avec la rainure est défini sur la paroi de bord extérieur.

4. Récipient pour produits chimiques selon la revendication 1, **caractérisé en ce que** la portion de corps comprend une portion formant tronc (300) et une portion inférieure (400), la portion formant tronc est un cylindre creux, une extrémité de la portion formant tronc et de la portion de tête sont soudées l'une à l'autre, et l'autre extrémité de la portion formant tronc et de la portion inférieure sont soudées l'une à l'autre.

5. Récipient pour produits chimiques selon la revendication 4, **caractérisé en ce que** la portion inférieure comprend une paroi inférieure (410), une paroi latérale inférieure s'étendant depuis un bord de la paroi inférieure et une portion de support (430) s'étendant depuis le bord de la paroi inférieure, une direction d'extension de la portion de support est située à l'opposé de la paroi latérale inférieure, et la paroi latérale inférieure (420) et la portion formant tronc sont soudées l'une à l'autre.

6. Récipient pour produits chimiques selon la revendication 4, **caractérisé en ce que** la portion inférieure et la portion de tête sont formées par moulage par injection en utilisant un même moule.

7. Récipient pour produits chimiques selon la revendication 4, **caractérisé en ce que** la portion formant tronc est formée par soudure d'au moins deux composants cylindriques.

8. Récipient pour produits chimiques selon la revendication 1, **caractérisé en ce que** la portion de corps et la portion de tête sont formées par moulage par injection en utilisant un même moule.

9. Procédé (100) de production d'un récipient pour produits chimiques, le procédé comprenant les étapes consistant à :
- fournir une portion de tête (200) comprenant une paroi supérieure (210), une paroi latérale de tête (220) s'étendant depuis un bord de la paroi supérieure ;
- fournir une portion de corps (300, 400) ; et
- souder la portion de tête et la portion de corps pour définir une chambre (500) ;
dans lequel la portion de tête est fabriquée à partir d'une portion de tête brute (290) comprenant une paroi supérieure, une paroi latérale de tête s'étendant depuis un bord de la paroi supérieure, une paroi de bord externe s'étendant depuis le bord de la paroi supérieure et une pluralité de renflements (230) s'étendant de manière extérieure depuis une surface externe de la paroi supérieure, la portion de tête brute est traitée pour former une pluralité de trous de raccordement (251) s'étendant de manière intérieure à partir de surface des renflements et une pluralité de trous de conduite (252) s'étendant de manière intérieure depuis les trous de raccordement et passant à travers la paroi supérieure, une taille du trou de raccordement est supérieure à celle du trou de pipeline,
dans lequel les renflements (230) comprennent une bosse (231) située au milieu de la paroi supérieure et une nervure (232) située autour de la bosse, et un trou de raccordement (251) est défini sur la bosse et au moins un trou de raccordement (251) est défini sur la nervure,
dans lequel le procédé consiste en outre à fournir une pluralité d'éléments de mise en prise chacun possédant un trou traversant, les éléments de mise en prise sont capables d'être fixés de manière amovible au sein des trous de raccordement, lorsqu'un élément de mise en prise est fixé au sein d'un trou de raccordement, le trou traversant de l'un élément de mise en prise et du trou de conduite correspondant à l'un trou de raccordement forment un passage de conduite,
une conduite est capable de s'étendre au sein de la chambre en passant à travers le passage de conduite, et dans lequel la chambre est fermée par une combinaison des éléments de mise en prise et des trous de raccordement.

10. Procédé selon la revendication 9, **caractérisé en ce qu'**une direction d'extension de la paroi de bord extérieur est située à l'opposé de la paroi latérale de tête, et la paroi de bord extérieur et la paroi supérieure de la portion de tête définisse ensemble une rainure destinée à recevoir un liquide chimique s'échappant du récipient pour produits chimiques.

11. Procédé selon la revendication 10, **caractérisé en ce qu'**un trou de drainage communicant avec la rainure est défini sur la paroi de bord extérieur.

12. Procédé selon la revendication 9, **caractérisé en ce que** la portion de corps comprend une portion formant tronc et une portion inférieure, la soudure de la portion de tête de la portion de corps consiste à :
- souder une extrémité de la portion formant tronc et de la portion de tête l'une à l'autre ; et
- souder l'autre extrémité de la portion formant tronc et de la portion inférieure l'une à l'autre.

13. Procédé selon la revendication 12, **caractérisé en ce que** la portion inférieure comprend une paroi inférieure, une paroi latérale inférieure s'étendant depuis un bord de la paroi inférieure et une portion de support s'étendant depuis le bord de la paroi inférieure, une direction d'extension de la portion de support est située à l'opposé de la paroi latérale inférieure, et la paroi latérale inférieure et la portion formant tronc sont soudées l'une à l'autre.

14. Procédé selon la revendication 12, **caractérisé en ce que** la portion inférieure et la portion de tête brute sont formées par moulage par injection en utilisant un même moule.

15. Procédé selon la revendication 9, **caractérisé en ce que** la portion de corps et la portion de tête sont formées par moulage par injection en utilisant un même moule.
